# EUROPÄISCHE PATENTSCHRIFT

(11) **EP 1 236 182 B1**
(45) Veröffentlichungstag und Bekanntmachung des Hinweises auf die Patenterteilung: **30.07.2003**
(21) Anmeldenummer: 01976146.9
(22) Anmeldetag: 24.08.2001
(51) Int. Cl.: G07C 9/02, G06K 7/08, G07F 17/14

(54) **ZUGANGSKONTROLLEINRICHTUNG**
ACCESS CONTROL DEVICE
DISPOSITIF DE CONTROLE D'ACCES

(30) Priorität: 19.09.2000 DE 10046335
(43) Veröffentlichungstag der Anmeldung: 04.09.2002
(73) Patentinhaber: SkiData AG, 5083 Gartenau (AT)
(72) Erfinder: WIESINGER, Bernhard, A-5020 Salzburg (AT); STOCKHAMMER, Rudolf, A-5340 St. Gilgen (AT)
(74) Vertreter: Berngruber, Otto, Dr. Dipl.-Chem.
(86) Internationale Anmeldenummer: EP0109806
(87) Internationale Veröffentlichungsnummer: WO02027669

(56) Entgegenhaltungen:
- WO-A-88/03296
- WO-A-94/25939
- DE-A- 19 831 767
- DE-U- 29 902 969

## Beschreibung

Die Erfindung bezieht sich auf eine Zugangskontrolleinrichtung mit einem Lesegerät, welches beim Lesen eines gültigen Datenträgers eine Personenvereinzelungseinrichtung betätigt.

Derartige Zugangskontrolleinrichtungen werden beispielsweise zum Zugang von Freizeiteinrichtungen, wie Freizeitparks, verwendet.

Das Lesegerät einer solchen Zugangskontrolleinrichtung bildet, insbesondere wenn es mit einer Antenne zum Lesen kontaktloser Datenträger versehen ist, einen wuchtigen, optisch wenig ansprechenden Kasten. Um das Aussehen des Lesegeräts zu verbessern ist es bekannt, die Vorder- und Rückwand des großen Antennenabschnitts des Lesegeräts aus einem durchsichtigen Material zu bilden. Auch ist es bekannt, die Vorderwand des Antennenabschnitts als Werbe- oder dgl. Informationsfläche auszubilden, damit der durch den wuchtigen Kasten entstehende ungünstige optische Eindruck durch die Wahrnehmung optischer Informationen abgeschwächt wird (DE 198 31 767 A1).

Ferner ist es bekannt, über die Zugangskontrolleinrichtungen, wenn sie außer Betrieb sind, Schutzhüllen aus Folienmaterial zu stülpen, um sie vor Umwelteinflüssen zu schützen.

Aufgabe der Erfindung ist es, eine optisch ansprechende Zugangskontrolleinrichtung zu geringen Kosten bereitzustellen.

Dies wird erfindungsgemäß mit der im Anspruch 1 gekennzeichneten Zugangskontrolleinrichtung erreicht. In den Unteransprüchen sind vorteilhafte Ausgestaltungen der erfindungsgemäßen Zugangskontrolleinrichtung angegeben.

Erfindungsgemäß wird zumindest die Vorderseite des Lesegerätgehäuses durch einen Formkörper abgedeckt. Der Formkörper ist dazu mit einer Ausnehmung versehen, um über das Lesegerätgehäuse gestülpt werden zu können.

Das Design des Formkörpers wird vorzugsweise der Architektur der Freizeiteinrichtung, beispielsweise dem Thema des Freizeitparks, angepasst, die bzw. der über die erfindungsgemäße Zugangskontrolleinrichtung zugänglich ist.

Beispielsweise können beim Zugang zu einem Märchenpark die Formkörper durch Köpfe von Märchenfiguren gebildet werden, oder Klemmbausteine, einen Fußball usw. Damit wird der Besucher auf das jeweilige Thema des Fun- oder Freizeitparks bzw. der Veranstaltung schon beim Eintritt eingestimmt, zumal, um auch einen größeren Besucheransturm bewältigen zu können, derartige Parks oft eine Vielzahl nebeneinander angeordneter Zugangsspuren besitzen.

Abgesehen von dem Formkörper kann erfindungsgemäß die Zugangskontrolleinrichtung völlig unverändert bleiben. Es braucht also lediglich der entsprechende Formkörper hergestellt zu werden. Die Herstellung solcher Formkörper ist jedoch mit geringen Kosten verbunden.

Der Formkörper kann aus einem beliebigen Material bestehen, z.B. Papiermaché oder Holz. Er kann massiv oder hohl ausgebildet sein. Vorzugsweise besteht der Formkörper jedoch aus Kunststoff. Der Kunststoff kann geschäumt oder ungeschäumt sein. Wenn der Formkörper Vorsprünge aufweist, also beispielsweise als Figur mit Nasen und Ohren ausgebildet ist, kann er, um die Gefahr von Verletzungen zu verhindern, auch aus einem gummielastischen Material bestehen.

Der Formkörper deckt zumindest die beim Zugang sichtbare Vorderseite des Lesegerätgehäuses möglichst vollständig ab. Damit der über das Lesegerät gestülpte Formkörper hält, übergreift er vorzugsweise zumindest auch einen Teil der Rückseite des Lesegerätgehäuses. Das heißt, das Lesegerätgehäuse ist vorzugsweise so ausgebildet, dass es zumindest einen nach oben ragenden Abschnitt aufweist, der vom übergestülpten Formkörper übergriffen wird, wobei der nach oben ragende Abschnitt des Lesegerätgehäuses von unten in die Ausnehmung des Formteils derart eingreift, dass das Formteil an diesem Abschnitt des Lesegerätgehäuses eingehängt ist. Damit der eingehängte Formkörper in dieser Position fixiert wird, also nicht wackelt, ist die Ausnehmung des Formkörpers der Form des nach oben ragenden Einhängeabschnitts des Lesegerätgehäuses angepasst.

Wenn ein kontaktloser Datenträger mit einem Transponder verwendet wird, kann der die Antenne aufweisende Abschnitt des Lesegerätgehäuses den nach oben ragenden Abschnitt bilden, an dem der übergestülpte Formkörper eingehängt ist. Der die Antenne aufnehmende Gehäuseabschnitt des Lesegerätes ist im allgemeinen flächig, also als Platte, insbesondere als Scheibe oder Schüssel ausgebildet. Eine Scheiben- oder Schüsselform ist vor allem dann von Vorteil, wenn der Formkörper einen Kopf bildet.

Das Lesegerät kann jedoch auch zum Lesen eines passiven Datenträgers ausgebildet sein, also beispielsweise einer Karte mit einem Magnetstreifen und/oder einem Strichcode oder einer kontaktbehafteten Chipkarte. Das Lesegerät weist dann zum Einstecken der Karte einen Einsteckschlitz auf. Auch kann das Lesegerät sowohl zum Lesen kontaktloser Datenträger, also mit einer Antenne, wie zum Lesen passiver Datenträger, also mit einem Einsteckschlitz versehen sein.

Vorzugsweise ist dann der Einsteckschlitz in der Vorderseite des die Antenne aufnehmenden vorderen Abschnitts des Lesegerätgehäuses vorgesehen.

Damit der Datenträger in den Einsteckschlitz eingeführt werden kann, weist der Formkörper im Bereich des Einsteckschlitzes eine Aussparung auf. Die Aussparung kann dabei optisch in den Formkörper integriert sein, also z.B. bei einem als Kopf ausgebildeten Formkörper den Mundbereich des Kopfes bilden.

Die erfindungsgemäße Zugangskontrolleinrichtung kann für jede Zugangsspur ein Lesegerät aufweisen. Es kann jedoch auch ein Lesegerät zwischen zwei Zugangsspuren angeordnet sein.

Nachstehend ist eine Ausführungsform der erfindungsgemäßen Zugangskontrolleinrichtung anhand der Zeichnung beispielhaft näher erläutert. Darin zeigen:

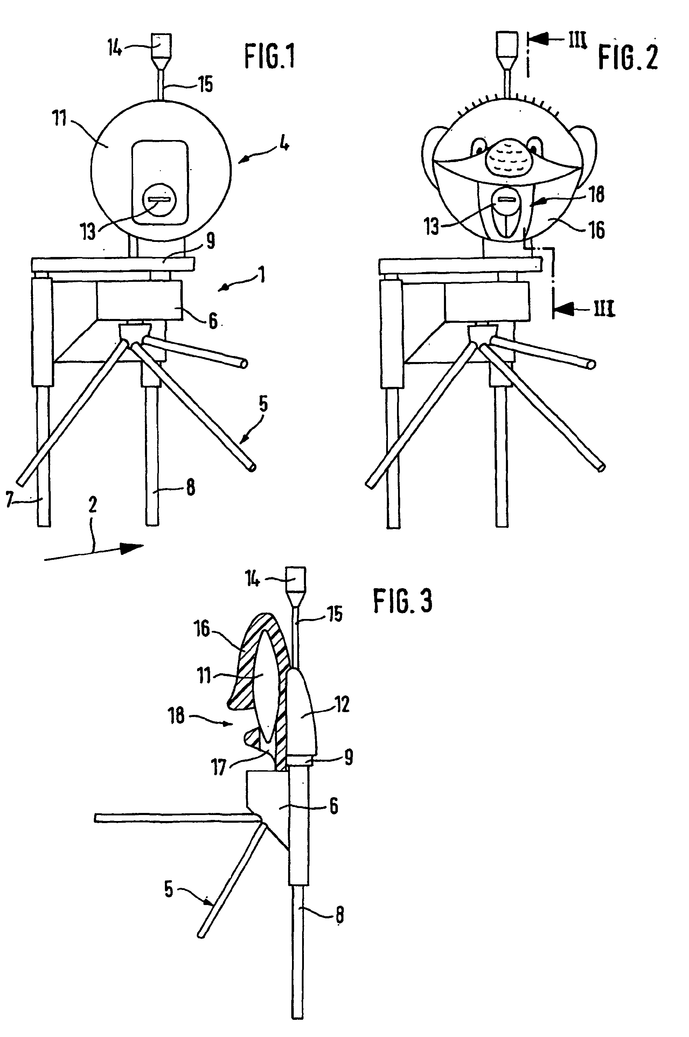

- Fig. 1: eine Vorderansicht einer Zugangskontrolleinrichtung ohne Formkörper;
- Fig. 2: eine der Fig. 1 entsprechende Ansicht der Zugangskontrolleinrichtung mit auf das Lesegerät gestülptem Formkörper; und
- Fig. 3: eine Seitenansicht der Zugangskontrolleinrichtung mit dem nach Fig. 2 entlang der Linie III-III geschnittenen Formkörper.

Danach weist die Zugangskontrolleinrichtung 1 an der durch den Pfeil 2 schematisch dargestellten Zugangsspur z.B. zu einem Freizeitpark in einem Gehäuse 4 ein Lesegerät auf, das beim Lesen eines gültigen, also mit einer Zugangsberechtigung codierten Datenträger eine Personenvereinzelungseinrichtung ansteuert, d.h., das Drehkreuz 5 entsperrt. Das Lesegerätgehäuse 4 ist schräg in Zugangsrichtung gedreht angeordnet.

Das Gehäuse 6, an dem das Drehkreuz 5 drehbar gelagert ist, ist an einem Gestell mit zwei Standrohren 7, 8 höhenverstellbar befestigt.

Das Lesegerät in dem Gehäuse 4 ist auf einer Konsole 9 auf den Stangen 6, 7 des Gestells angeordnet. Das Lesegerät ist zum Lesen eines kontaktlosen Datenträgers, also eines Transponders ausgebildet. Dazu weist es eine Antenne auf, die in dem scheiben- oder schüsselförmigen vorderen Abschnitt 11 des Gehäuses 4 angeordnet ist.

Der scheibenförmige, leicht gewölbte vordere Abschnitt 11 ist an dem hinteren Gehäuseabschnitt 12 des Lesegerätgehäuses 4 derart befestigt, dass der vordere Abschnitt 11 den hinteren Abschnitt 12 nach oben und auf beiden Seiten überragt.

Mit dem Lesegerät in dem Gehäuse 4 können zugleich passive Datenträger gelesen werden. Dazu weist der vordere Gehäuseabschnitt 11 an seiner Vorderseite einen Einsteckschlitz 13 auf, in den ein passiver Datenträger gesteckt werden kann.

Eine Ampel 14 ist an einer Stange 15 im Abstand von dem vorderen Gehäuseabschnitt 11 an dem hinteren Gehäuseabschnitt 12 befestigt.

Auf das Lesegerätgehäuse 4 ist ein Formkörper 16 gestülpt, der als Kopf einer Comic-Figur ausgebildet ist. Der Formkörper 16 weist dazu eine nach unten offene Innenausnehmung 17 auf.

Der mit seiner Innenausnehmung 17 auf den vorderen Abschnitt 11 des Lesegerätgehäuses 4 gesteckte Formkörper 16 deckt die von der Zugangsspur 2 aus sichtbaren Flächen des Lesegerätgehäuses 4 vollständig ab. Damit der über das Lesegerätgehäuse 4 gestülpte Formkörper 16 hält, übergreift er auch den nach oben und zur Seite ragenden Teil der Rückseite des vorderen Gehäuseabschnitts 11, d.h., er greift zwischen die Stange 15 mit der Ampel 14 und den vorderen Gehäuseabschnitt 11. Gemäß Fig. 3 ist die Ausnehmung 17 des Formkörpers 16 der Kontur des den hinteren Abschnitt 12 nach oben (und seitlich) überragenden Bereichs des vorderen Gehäuseabschnittes 11 angepasst. Der als Kopf ausgebildete Formkörper 16 weist im Bereich des Einsteckschlitzes 13 eine Ausnehmung, nämlich eine Öffnung 18 auf, die den Mundbereich des Kopfes bildet.

## Patentansprüche

1. Zugangskontrolleinrichtung mit einem in einem Gehäuse angeordneten Lesegerät, welches beim Lesen eines gültigen Datenträgers eine Personenvereinzelungseinrichtung betätigt, **gekennzeichnet durch** einen Formkörper (16), der mit einer Ausnehmung (17) zum Überstülpen über das Lesegerätgehäuse (4) versehen ist und zumindest die beim Zugang sichtbare Vorderseite des Lesegerätgehäuses (4) im Betriebszustand der Zugangskontrolleinrichtung abdeckt.

2. Zugangskontrolleinrichtung nach Anspruch 1, **dadurch gekennzeichnet, dass** das Lesegerätgehäuse (4) einen nach oben ragenden Abschnitt zum Einhängen des übergestülpten Formkörpers (16) aufweist.

3. Zugangskontrolleinrichtung nach Anspruch 2, **dadurch gekennzeichnet, dass** das Lesegerät mit einer Antenne zum Lesen kontaktloser Datenträger versehen ist.

4. Zugangskontrolleinrichtung nach einem der vorstehenden Ansprüche, **dadurch gekennzeichnet dass** der die Antenne aufnehmende Abschnitt (11) des Lesegerätgehäuses (4) zumindest teilweise den nach oben ragenden Abschnitt zum Einhängen des übergestülpten Formkörpers (16) bildet.

5. Zugangskontrolleinrichtung nach Anspruch 4, **dadurch gekennzeichnet, dass** der die Antenne aufweisende Abschnitt (11) des Lesegerätgehäuses (4) den vorderen Abschnitt des Lesegerätgehäuses (4) bildet.

6. Zugangskontrolleinrichtung nach einem der vorstehenden Ansprüche, **dadurch gekennzeichnet, dass** das Lesegerätgehäuse (4) an seiner Vorderseite einen Einsteckschlitz (13) zum Einführen eines Datenträgers aufweist.

7. Zugangskontrolleinrichtung nach Anspruch 5 oder 6, **dadurch gekennzeichnet, dass** der Einsteckschlitz (13) in der Vorderseite des die Antenne aufnehmenden Abschnitts (11) des Lesegerätgehäuses (4) vorgesehen ist.

8. Zugangskontrolleinrichtung nach Anspruch 4 oder 5, **dadurch gekennzeichnet, dass** der Formkörper (16) im Bereich des Einsteckschlitzes (13) eine Aussparung (18) zum Einführen des Datenträgers in den Einsteckschlitz (13) aufweist.

## Claims

1. An access control device having a reader arranged in a housing which reader actuates a person singling device when reading a valid data carrier, **characterized by** a formed body (16) which is provided with a recess (17) for it to be put over the reader housing (4) and which covers at least the front side of the reader housing (4) when the access control device is in its operating condition.

2. An access control device according to claim 1, **characterized in that** the reader housing (4) has an upwardly protruding portion for attaching the formed body (16) put over.

3. An access control device according to claim 2, **characterized in that** the reader is provided with an antenna for reading contactless data carriers.

4. An access control device according to any of the above claims, **characterized in that** the portion (11) of the reader housing (4) receiving the antenna constitutes at least partly the upwardly protruding portion for attaching the formed body (16) put over.

5. An access control device according to claim 4, **characterized in that** the portion (11) of the reader housing (4) having the antenna constitutes the front portion of the reader housing (4).

6. An access control device according to any of the above claims, **characterized in that** the reader housing (4) has an inserting slit (13) on its front side for introducing a data carrier.

7. An access control device according to claim 5 or 6, **characterized in that** the inserting slit (13) is provided in the front side for the portion (11) of the reader housing (4) receiving the antenna.

8. An access control device according to claim 4 or 5, **characterized in that** the formed body (16) has a gap (18) in the area of the inserting slit (13) for introducing the data carrier into the inserting slit (13).

## Revendications

1. Dispositif de contrôle d'accès comportant un lecteur agencé dans un boîtier et qui actionne un dispositif d'individualisation de personnes à la lecture d'un support de données valable, **caractérisé par** un corps moulé (16) qui est pourvu d'un évidement (17) pour être enfilé sur le boîtier (4) de lecteur et qui recouvre au moins la partie antérieure du boîtier (4) de lecteur visible à l'accès, lorsque le dispositif de contrôle d'accès est en état de fonctionnement.

2. Dispositif de contrôle d'accès selon la revendication 1, **caractérisé en ce que** le boîtier (4) de lecteur présente une portion faisant saillie vers le haut pour suspendre le corps moulé (16) enfilé.

3. Dispositif de contrôle d'accès selon la revendication 2, **caractérisé en ce que** le lecteur est pourvu d'une antenne pour lire des supports de données sans contact.

4. Dispositif de contrôle d'accès selon l'une des revendications précédentes, **caractérisé en ce que** la portion (11) du boîtier (4) de lecteur qui reçoit l'antenne forme au moins partiellement la portion faisant saillie vers le haut pour suspendre le corps moulé (16) enfilé.

5. Dispositif de contrôle d'accès selon la revendication 4, **caractérisé en ce que** la portion (11) du boîtier (4) de lecteur, qui présente l'antenne, forme la portion antérieure du boîtier (4) de lecteur.

6. Dispositif de contrôle d'accès selon l'une des revendications précédentes, **caractérisé en ce que** le boîtier (4) de lecteur présente sur sa partie antérieure une fente d'introduction (13) pour introduire un support de données.

7. Dispositif de contrôle d'accès selon la revendication 5 ou 6, **caractérisé en ce que** la fente d'introduction (13) est prévue dans la partie antérieure de la portion (11) du boîtier (4) de lecteur, laquelle reçoit l'antenne.

8. Dispositif de contrôle d'accès selon la revendication 4 ou 5, **caractérisé en ce que** le corps moulé (16) présente dans la région de la fente d'introduction (13) un évidement (18) pour introduire le support de données dans la fente d'introduction (13).
